# EUROPÄISCHE PATENTANMELDUNG

(11) **EP 4 660 027 A1**
(43) Veröffentlichungstag der Anmeldung: **10.12.2025**
(21) Anmeldenummer: 25176033.6
(22) Anmeldetag: 13.05.2025
(51) Int. Cl.: B60T 8/1755

(54) **BREMSSYSTEM EINES FAHRZEUGS MIT WENIGSTENS ZWEI GELENKTEN UND GEBREMSTEN VORDERACHSEN UND VERFAHREN ZUM STEUERN ODER REGELN EINES BREMSSYSTEMS**

(30) Priorität: 04.06.2024 DE 102024001809
(71) Anmelder: KB Intellectual Property GmbH & Co. KG, 82049 Pullach (DE)
(72) Erfinder: HEPPELER, Gunter, 70469 Stuttgart (DE); HUMMEL, Stefan, 70191 Stuttgart (DE)

(57) **Zusammenfassung**

Die Erfindung offenbart ein Bremssystem (10) eines Fahrzeugs (8) mit wenigstens zwei gelenkten und gebremsten Vorderachsen, einer ersten gelenkten und gebremsten Vorderachse (VA1) und wenigstens einer zweiten gelenkten und gebremsten Vorderachse (VA2) und mit wenigstens einer Hinterachse (HA), umfassend: erste Bremsmittel (1), die konfiguriert sind zum Bremsen von ersten Rädern (VA1r, VA1l) der ersten Vorderachse (VA1) und hierzu erste Radbremsen (VA1Br, VA1Bl) an den ersten Rädern (VA1r, VA1l) aufweisen, zweite Bremsmittel (2), die konfiguriert sind zum Bremsen von zweiten Rädern (VA2r, VA2l) der wenigstens einer zweiten Vorderachse (VA2) und hierzu zweite Radbremsen (VA2Br, VA2Bl) an den zweiten Rädern (VA2r, VA2l) aufweisen, Steuer- oder Regelmittel (5), die konfiguriert sind, um die ersten Bremsmittel (1) und die zweiten Bremsmittel (2) Steuern oder Regeln zu können sowie Erkennungsmittel (7), die konfiguriert sind zum Erkennen einer signifikanten Übersteuersituation des Fahrzeugs (8) und im Falle einer erkannten signifikanten Übersteuersituation zum Erzeugen eines Übersteuersignals, wobei die Steuer- oder Regelmittel (5), insbesondere Steuer- oder Regelmittel der Fahrdynamikregelung (ESP) weiterhin konfiguriert sind, um bei einer durch die Erkennungsmittel (7) erkannten signifikanten Übersteuersituation die ersten Bremsmittel (1) und die zweiten Bremsmittel (2) abhängig von dem dann erzeugten Übersteuersignal zu steuern oder zu regeln.

## Beschreibung

Die Erfindung betrifft ein Bremssystem eines Fahrzeugs mit wenigstens zwei gelenkten und gebremsten Vorderachsen, einer ersten gelenkten und gebremsten Vorderachse und wenigstens einer zweiten gelenkten und gebremsten Vorderachse und mit wenigstens einer Hinterachse, gemäß dem Oberbegriff von Anspruch 1 sowie ein Fahrzeug mit einem solchen Bremssystem gemäß dem Oberbegriff von Anspruch 14, sowie ein Verfahren zum Steuern oder Regeln eines insbesondere ein Fahrdynamikregelsystem (ESP) umfassenden Bremssystems eines Fahrzeugs mit wenigstens zwei gelenkten und gebremsten Vorderachsen, einer ersten gelenkten und durch erste Bremsmittel bremsbaren Vorderachse und wenigstens einer zweiten gelenkten und durch zweite Bremsmittel gebremsten Vorderachse und mit wenigstens einer Hinterachse gemäß Anspruch 15.

Beispielsweise EP 3 707 058 B1 offenbart ein gattungsgemäßes Bremssystem für ein Fahrzeug mit einer Doppelvorderradlenkung.

Die Aufgabe besteht darin, ein Bremssystem und ein Verfahren zum Steuern oder regeln eines Bremssystems für ein Fahrzeug mit einer Doppelvorderradlenkung zur Verfügung zu stellen, mit welchem eine hohe Fahrstabilität erreicht wird. Weiterhin soll auch ein Fahrzeug mit einem solchen Bremssystem zur Verfügung gestellt werden. Diese Aufgabe wird die Ansprüche 1, 14 und 15 gelöst.

Die abhängigen Ansprüche beziehen sich auf vorteilhafte Ausgestaltungen des Gegenstandes der unabhängigen Ansprüche.

### Offenbarung der Erfindung

In einem ersten Aspekt geht die Erfindung aus von einem Bremssystem eines Fahrzeugs mit wenigstens zwei gelenkten und gebremsten Vorderachsen, einer ersten gelenkten und gebremsten Vorderachse und wenigstens einer zweiten gelenkten und gebremsten Vorderachse und mit wenigstens einer Hinterachse zur Verfügung, umfassend:
a) erste Bremsmittel, die konfiguriert sind zum Bremsen von ersten Rädern der ersten Vorderachse und hierzu erste Radbremsen an den ersten Rädern aufweisen,
c) zweite Bremsmittel, die konfiguriert sind zum Bremsen von zweiten Rädern der wenigstens einer zweiten Vorderachse und hierzu Radbremsen an den zweiten Rädern aufweisen,
d) Steuer- oder Regelmittel, die konfiguriert sind, um die ersten Bremsmittel und die zweiten Bremsmittel Steuern oder Regeln zu können.

In Fahrtrichtung des Fahrzeugs gesehen ist die erste Vorderachse bevorzugt vor der wenigstens einen zweiten Vorderachse angeordnet.

Das Bremssystem kann insbesondere eine Fahrdynamikregelung (ESP) als Fahrerassistenzsystem umfassen. Die Fahrdynamikregelung ist konfiguriert zum gezielten Bremsen einzelner Räder (radindividuelles Bremsen), um ein Schleudern des Fahrzeugs insbesondere in Kurven sowohl beim Übersteuern als auch beim Untersteuern zu verhindern. Damit die Fahrdynamikregelung (ESP) auf kritische Fahrsituationen reagieren kann, vergleicht das System einen Soll-Zustand (Fahrerwunsch oder Wunsch eines Autopiloten) mit dem Fahrzustand (Ist-Zustand). Dabei liefert ein Lenkwinkelsensor den Soll-Zustand hinsichtlich der Fahrtrichtung. Das Motormanagement, Raddrehzahlsensoren und ein Gierratensensor (Gierrate, Querbeschleunigung) liefern die Daten des Ist-Zustands (Fahrzeugverhalten). Wenn eine signifikante Abweichung des Fahrzustandes vom Soll-Zustand festgestellt wird, greift die Fahrdynamikregelung (ESP) ein. Beispielsweise wird ein Übersteuern des Fahrzeugs durch Abbremsen eines kurvenäußeren Vorderrades einer Vorderachse und ein Untersteuern durch Abbremsung eines kurveninneren Hinterrades der Hinterachse korrigiert.

Das Bremssystem umfasst erfindungsgemäß:
e) Erkennungsmittel, insbesondere Erkennungsmittel der Fahrdynamikregelung (ESP) des Bremssystems, die konfiguriert sind zum Erkennen einer signifikanten Übersteuersituation des Fahrzeugs und im Falle einer erkannten signifikanten Übersteuersituation des Fahrzeugs zum Erzeugen eines Übersteuersignals, wobei
f) die Steuer- oder Regelmittel, insbesondere Steuer- oder Regelmittel der Fahrdynamikregelung (ESP) weiterhin konfiguriert sind, um bei einer durch die Erkennungsmittel erkannten signifikanten Übersteuersituation die ersten Bremsmittel und die zweiten Bremsmittel abhängig von dem dann erzeugten Übersteuersignal zu steuern oder zu regeln.

Die Steuer- oder Regelmittel des Bremssystems können daher Steuer- oder Regelmittel einer Fahrdynamikregelung (ESP) umfassen, welche mit den Erkennungsmitteln derart zusammenwirken, dass bei einer durch die Erkennungsmittel erkannten signifikanten Übersteuersituation die ersten Bremsmittel und die zweiten Bremsmittel abhängig von dem erzeugten Übersteuersignal von den Steuer- oder Regelmittel der Fahrdynamikregelung (ESP) gesteuert oder geregelt werden. Folglich werden die ersten Bremsmittel an der ersten Vorderachse und auch die zweiten Bremsmittel an der wenigstens einen zweiten Vorderachse in die Fahrdynamikregelung (ESP) des Bremssystems einbezogen. Dabei können die (pneumatischen oder hydraulischen) ersten Betriebsbremsdrücke in den ersten Radbremsen und die zweiten Betriebsbremsdrücke in den zweiten Radbremsen, und/oder die ersten Bremskräfte der ersten Radbremsen und die zweiten Bremskräfte der zweiten Radbremsen, und/oder die ersten Bremsschlüpfe der ersten Räder und die zweiten Bremsschlüpfe der zweiten Räder vorzugsweise durch die Fahrdynamikregelung (ESP) gesteuert oder geregelt werden. Indem die wenigstens eine zweite Vorderachse in die Fahrdynamikregelung (ESP) einbezogen wird, wird für eine Erhöhung der Fahrstabilität des Fahrzeugs gesorgt, vor allem in Übersteuer- und Untersteuersituationen.

Insbesondere können bei dem Bremssystem die Steuer- oder Regelmittel konfiguriert sein, um wenigstens einen Soll-Bremsparameter abhängig von dem Übersteuersignal zu steuern oder zu regeln, der eine Bremsung, Bremswirkung oder Abbremsung des Fahrzeugs beeinflussen kann. Ein Soll-Bremsparameter kann daher so definiert werden, dass er eine Bremsung, Bremswirkung oder Abbremsung des Fahrzeugs beeinflusst, wenn er umgesetzt wird. Soll-Bremsparameter kann auch bedeuten, dass er von den Steuer- oder Regelmitteln vorgegeben wird, insbesondere abhängig von einem Bremsanforderungssignal eines Bremswertgebers. Der Bremswertgeber kann ein durch einen Fuß eines Fahrers betätigbarer Bremswertgeber oder ein Autopilot-Bremswertgeber sein, der das Bremsanforderungssignal automatisch (autonom) erzeugt.

Der Soll-Bremsparameter kann wenigstens einer der folgenden Bremsparameter sein:
a) Ein Soll-Bremsdruck und/oder eine Soll-Bremskraft an wenigstens einer ersten Radbremse der ersten Vorderachse und/oder an wenigstens einer zweiten Radbremse der wenigstens einen zweiten Vorderachse, und/oder
b) ein Soll-Bremsschlupf wenigstens eines ersten Rads der ersten Vorderachse und/oder wenigstens eines zweiten Rads der wenigstens einen zweiten Vorderachse.

Weiterhin können bei dem Bremssystem die Steuer- oder Regelmittel, die ersten Bremsmittel und die zweiten Bremsmittel konfiguriert sein, um den wenigstens einen Soll-Bremsparameter
a) an wenigstens einer ersten Radbremse und/oder an wenigstens einem ersten Rad, insbesondere an allen ersten Radbremsen und/oder an allen ersten Rädern radindividuell zu steuern oder zu regeln, und
b) an wenigstens einer zweiten Radbremse und/oder an wenigstens einem zweiten Rad, insbesondere an allen zweiten Radbremsen und/oder an allen zweiten Rädern radindividuell zu steuern oder zu regeln.

Dabei werden insbesondere alle Räder an den Vorderachsen radindividuell (fahrdynamisch) geregelt. Dies betrifft beispielsweise 4S4K-Bremssysteme. Diese Variante zeichnet sich infolge der radindividuellen Steuerung oder Regelung insbesondere an allen ersten und zweiten Rädern der ersten und zweiten Vorderachsen durch eine hohe Fahrstabilität aus. Jedoch ist der Aufwand aufgrund der erforderlichen Anzahl der Steuer- und Regelkomponenten relativ hoch.

Auch können bei dem Bremssystem die Steuer- oder Regelmittel, die ersten Bremsmittel und die zweiten Bremsmittel konfiguriert sein, um den wenigstens einen Soll-Bremsparameter an wenigstens einem ersten Rad und/oder an wenigstens einer ersten Radbremse und an wenigstens einem zweiten Rad und/oder an wenigstens einer zweiten Radbremse seitenweise zu steuern oder zu regeln. Dabei werden insbesondere alle ersten und zweiten Räder jeweils seitenweise (fahrdynamisch) geregelt. Dies betrifft beispielsweise 4S2K-Bremssysteme. Da hier für eine Realisierung einer Fahrdynamikregelung (ESP) die Anzahl der erforderlichen Anzahl der Steuer- und Regelkomponenten geringer ist, zeichnet sich diese Variante durch einer geringeren Hardware- und Softwareaufwand aus.

Auch können bei dem Bremssystem die Steuer- oder Regelmittel, die ersten Bremsmittel und die zweiten Bremsmittel konfiguriert sein, um den wenigstens einen Soll-Bremsparameter
a) an wenigstens einer ersten Radbremse und/oder an wenigstens einem Rad, insbesondere an allen ersten Radbremsen und/oder an allen ersten Rädern radindividuell zu steuern oder zu regeln, und
b) an den zweiten Radbremsen und/oder an den zweiten Rädern achsweise oder einheitlich zu steuern oder zu regeln.

Eine achsweise oder einheitliche Steuerung oder Regelung bedeutet, dass die Räder oder Radbremsen der betreffenden Achse gemeinsam gesteuert oder geregelt werden, wobei insbesondere der wenigstens eine Soll-Bremsparameter (Soll-Bremsdruck, Soll-Bremskraft und/oder Soll-Bremsschlupf) dann für alle Räder der betreffenden Vorderachse, hier der wenigstens einen zweiten Vorderachse (im Wesentlichen) identisch ist. Diese Variante zeichnet sich durch einen Kompromiss zwischen einer Ersparnis von Steuer- und Regelkomponenten an der wenigstens einen zweiten Vorderachse und einer Erhöhung der Fahrstabilität durch die radindividuelle Steuerung oder Regelung an der ersten Vorderachse aus.

Beispielsweise können bei dieser Variante die ersten Bremsmittel erste pneumatische Radbremsen, insbesondere erste pneumatische Betriebsbremszylinder und ein zweikanaliges Druckregelmodul an der ersten Vorderachse aufweisen, um die ersten Betriebsbremsdrücke in den ersten pneumatischen Betriebsbremszylindern an den ersten Rädern der ersten Vorderachse radindividuell zu steuern oder zu regeln. Auch können bei dieser Variante die zweiten Bremsmittel an der wenigstens einen zweiten Vorderachse zweite pneumatische Radbremsen, insbesondere zweite pneumatische Betriebsbremszylinder an den zweiten Rädern der zweiten Vorderachse aufweisen sowie ein elektro-pneumatisches einkanaliges Druckregelmodul, um die zweiten Betriebsbremsdrücke in den zweiten pneumatischen Betriebsbremszylindern an den zweiten Rädern der zweiten Vorderachse achsweise zu steuern oder zu regeln.

Bei dieser Variante können dann die Steuer- oder Regelmittel, die ersten Bremsmittel und die zweiten Bremsmittel konfiguriert sein, um den wenigstens einen zweiten Soll-Bremsparameter an den achsweise oder einheitlich steuer- oder regelbaren zweiten Radbremsen und/oder an den einheitlich steuer- oder regelbaren zweiten Rädern abhängig von wenigstens einem ersten Soll-Bremsparameter an der ersten Radbremse des in der erkannten signifikanten Übersteuersituation kurvenäußeren ersten Rads und/oder an dem in der erkannten signifikanten Übersteuersituation kurvenäußeren ersten Rad zu steuern oder zu regeln, wobei dieser erste Soll-Bremsparameter in der erkannten signifikanten Übersteuersituation insbesondere von der Fahrdynamikregelung (ESP) vorgegeben wird.

Dieser erste, in der erkannten signifikanten Übersteuersituation insbesondere von der Fahrdynamikregelung (ESP) vorgegebene Soll-Bremsparameter umfasst beispielsweise den erste Soll-Bremsschlupf des kurvenäußeren ersten Rads der ersten Vorderachse und/oder den ersten Soll-Betriebsbremsdruck an der ersten Radbremse des kurvenäußeren ersten Rads der ersten Vorderachse.

Der wenigstens eine erste Soll-Bremsparameter, von welchem abhängig der wenigstens eine zweite Soll-Bremsparameter abgeleitet bzw. gesteuert oder geregelt wird, ist daher bevorzugt der insbesondere von der Fahrdynamikregelung (ESP) in der erkannten signifikanten Übersteuersituation vorgegebene erste Soll-Bremsschlupf des kurvenäußeren ersten Rads der ersten Vorderachse und/oder der vorzugsweise von der Fahrdynamikregelung (ESP) in der erkannten signifikanten Übersteuersituation vorgegebene erste Soll-Betriebsbremsdruck in der ersten Radbremse des kurvenäußeren ersten Rads der ersten Vorderachse. Da in einer signifikanten Übersteuersituation des Fahrzeugs stets auch eine gewisse Drehung des Fahrzeugs um die Hochachse (Gieren) erfolgt, ist die kurvenäußere Lage des kurvenäußeren ersten Rads der ersten Vorderachse auf die Drehung des Fahrzeugs in der signifikanten Übersteuersituation bezogen und beispielsweise anhand der Raddrehzahlsignale der Raddrehzahlsensoren der ersten Räder erkennbar.

Daher wird vorzugsweise die wenigstens eine zweite Vorderachse mit beispielsweise 2S1K-Konfiguration in die Fahrdynamikregelung (ESP) des Bremssystems derart einbezogen, dass insbesondere in einer erkannten signifikanten Übersteuersituation beispielsweise der zweite Soll-Bremsschlupf an den zweiten Rädern und/oder der zweite Betriebsbremsdruck in den zweiten Radbremsen der wenigstens einen zweiten Vorderachse abhängig von dem ersten Soll-Bremsschlupf des kurvenäußeren ersten Rads der ersten Vorderachse und/oder abhängig von dem ersten Soll-Betriebsbremsdruck in der ersten Radbremse des kurvenäußeren ersten Rads der ersten Vorderachse einheitlich oder achsweise gesteuert oder geregelt wird.

Diese Abhängigkeit kann beispielsweise darin bestehen, dass der zweite Soll-Bremsschlupf an den zweiten Rädern und/oder der zweite Soll-Betriebsbremsdruck an den zweiten Radbremsen der wenigstens einen zweiten Vorderachse dadurch berechnet wird, dass der erste Soll-Bremsschlupf des kurvenäußeren ersten Rads der ersten Vorderachse und/oder der erste Soll-Betriebsbremsdruck in der ersten Radbremse des kurvenäußeren Rads der ersten Vorderachse mit einem (insbesondere vorgegebenen) Faktor multipliziert wird. Dieser Faktor ist vorzugsweise größer als Null und (etwas) kleiner als Eins, insbesondere nur wenig kleiner als Eins. Die zweiten Räder der wenigstens einen zweiten Vorderachse werden dann in der erkannten signifikanten Übersteuersituation achsweise oder einheitlich beispielsweise mit einem relativ hohen zweiten Soll-Bremsschlupf gebremst, um die Seitenführung an dieser wenigstens einen zweiten Vorderachse zu reduzieren. In Kombination mit dem ESP-Eingriff an der ersten Vorderachse, dort insbesondere lediglich an dem kurvenäußeren ersten Rad, verbessert sich die Fahrstabilität des Fahrzeugs signifikant im Vergleich zu einer Regelstrategie, bei welcher beispielsweise lediglich die erste Vorderachse in die Fahrdynamikregelung (ESP) einbezogen ist, nicht aber die wenigstens eine zweite Vorderachse.

Auch können die Steuer- oder Regelmittel, insbesondere in Form einer elektronischen Bremssteuerung mit implementierter Steuer- oder Regelsoftware Routinen einer Fahrdynamikregelung (ESP) aufweisen, welche beispielsweise auch eine ABS-Regelung umfasst. Hierzu ist beispielsweise wenigstens ein erstes Rad der ersten Vorderachse und/oder wenigstens ein zweites Rad der wenigstens einen zweiten Vorderachse mit je einem Raddrehzahlsensor versehen, der dann ein Raddrehzahlsignal an Steuer- oder Regelmittel meldet, um das betreffende erste oder zweite Rad Bremsschlupfregeln zu können.

Auch können bei dem Bremssystem die Erkennungsmittel konfiguriert sein, um die signifikante Übersteuersituation des Fahrzeugs zu erkennen und dann das Übersteuersignal zu erzeugen, wenn eine erfasste Ist-Drehrate des Fahrzeugs oder eine mit dieser korrelierende Ist-Größe von einer Soll-Drehrate des Fahrzeugs oder von einer mit dieser korrelierenden Soll-Größe um mehr eine vorgegebene Schwelle oder signifikant abweicht. Die Soll-Drehrate kann dabei beispielsweise von einem Fahrer des Fahrzeugs über das Lenkrad oder von einer Autopiloteinrichtung über einen Soll-Lenkwinkel vorgegeben werden.

Auch können bei dem Bremssystem die Steuer- oder Regelmittel, die ersten Bremsmittel und die zweiten Bremsmittel konfiguriert sein, um die ersten Bremsmittel und die zweiten Bremsmittel, insbesondere den wenigstens einen Soll-Bremsparameter, insbesondere den wenigstens einen zweiten Soll-Bremsparameter an der wenigstens einen zweiten Vorderachse abhängig von der Abweichung zu steuern oder zu regeln.

Mit anderen Worten wird der wenigstens eine Soll-Bremsparameter, insbesondere der wenigstens eine zweite Soll-Bremsparameter an den zweiten Rädern und/oder an den zweiten Radbremsen abhängig von der Abweichung der Ist-Drehrate von der Soll-Drehrate angepasst, wobei die Anpassung umso größer ist, desto größer die Abweichung ist, und die Anpassung umso kleiner ist, desto kleiner die Abweichung ist, insbesondere sofern diese Abweichung die Schwelle überschreitet oder signifikant ist.

Die signifikante Übersteuersituation kann insbesondere resultieren aus:
a) einer Aktivierung der ersten Bremsmittel und der zweiten Bremsmittel durch die Steuer- oder Regelmittel im Rahmen einer fahrerabhängigen oder fahrerunabhängigen Bremsung (z.B. Bremsung durch die Autopiloteinrichtung), und/oder
b) einem fahrerabhängigen oder fahrerunabhängigen Lenkmanöver (z.B. Lenken durch die Autopiloteinrichtung).

Das Bremssystem kann beispielsweise ein elektro-pneumatisches Bremssystem, insbesondere ein elektronisch bremsdruckgeregeltes Bremssystem (EBS), ein elektro-hydraulisches Bremssystem und/oder ein elektro-mechanisches Bremssystem sein oder umfassen.

Weiterhin können bei dem Bremssystem
a) die Erkennungsmittel wenigstens einen Drehratensensor und/oder wenigstens einen Beschleunigungssensor, und/oder
b) die Steuer- oder Regelmittel wenigstens ein elektronisches Steuergerät umfassen, in welchem insbesondere Routinen einer Fahrdynamikregelung implementiert sind, und/oder
c) die ersten Bremsmittel und/oder die zweiten Bremsmittel pneumatische Radbremsen und ein elektro-pneumatisches einkanaliges oder ein zweikanaliges Druckregelmodul an der ersten Vorderachse und/oder an der wenigstens einen zweiten Vorderachse aufweisen, wobei
   c1) das einkanalige Druckregelmodul konfiguriert und von den Steuer- oder Regelmitteln gesteuert oder geregelt ist, um die ersten und/oder zweiten Radbremsen und/oder die ersten und/oder zweiten Räder, insbesondere die zweiten Radbremsen und/oder die zweiten Räder der wenigstens einen zweiten Vorderachse achsweise oder einheitlich zu steuern oder zu regeln, und
   c2) das zweikanalige Druckregelmodul konfiguriert und von den Steuer- oder Regelmitteln gesteuert oder geregelt ist, um Radbremsen der Räder, insbesondere Radbremsen aller Räder der ersten Vorderachse radindividuell zu steuern oder zu regeln.

In einem zweiten Aspekt offenbart die Erfindung ein Fahrzeug, insbesondere Nutzfahrzeug, umfassend ein oben beschriebenes Bremssystem.

In einem dritten Aspekt offenbart die Erfindung ein Verfahren zum Steuern oder Regeln eines insbesondere eine Fahrdynamikregelung aufweisenden Bremssystems eines Fahrzeugs mit wenigstens zwei gelenkten und gebremsten Vorderachsen, einer ersten gelenkten und durch erste Bremsmittel bremsbaren Vorderachse und wenigstens einer zweiten gelenkten und durch zweite Bremsmittel gebremsten Vorderachse und mit wenigstens einer Hinterachse, wobei die ersten Bremsmittel zum Bremsen von ersten Rädern der ersten Vorderachse und hierzu erste Radbremsen an den ersten Rädern vorgesehen werden, und die zweiten Bremsmittel zum Bremsen von zweiten Rädern der zweiten Vorderachse und hierzu zweite Radbremsen an den zweiten Rädern vorgesehen werden. Das Verfahren umfasst dann insbesondere im Rahmen der Fahrdynamikregelung (ESP) des Bremssystems wenigstens die folgenden Schritte:
a) Überprüfen und Erkennen, ob eine signifikante Übersteuersituation des Fahrzeugs vorliegt, und
b) falls eine signifikante Übersteuersituation des Fahrzeugs erkannt worden ist:
   b1) Erzeugen eines Übersteuersignals, und
   b2) Steuern oder Regeln der ersten Bremsmittel und der zweiten Bremsmittel abhängig von dem Übersteuersignal.

Wie bereits oben zu dem Bremssystem ausgeführt, werden dadurch beide Vorderachsen und insbesondere die wenigstens eine zweite Vorderachse bei einer erkannten signifikanten Übersteuersituation insbesondere in die Fahrdynamikregelung (ESP) des Bremssystems einbezogen.

Bei dem Verfahren wird bevorzugt wenigstens ein Soll-Bremsparameter abhängig von dem Übersteuersignal gesteuert oder geregelt, der eine Bremsung, Bremswirkung oder Abbremsung des Fahrzeugs beeinflusst oder beeinflussen kann.

Bei dem Verfahren kann der wenigstens eine Soll-Bremsparameter
a) an wenigstens einer ersten Radbremse und/oder an wenigstens einem ersten Rad radindividuell gesteuert oder geregelt werden, und
b) an wenigstens einer zweiten Radbremse und/oder an wenigstens einem zweiten Rad radindividuell gesteuert oder geregelt werden.

Alternativ kann bei dem Verfahren der wenigstens eine Bremsparameter der wenigstens eine Soll-Bremsparameter an wenigstens einem ersten Rad und/oder an wenigstens einer ersten Radbremse und an wenigstens einem zweiten Rad und/oder an wenigstens einer zweiten Radbremse seitenweise gesteuert oder geregelt werden.

Weiterhin alternativ kann bei dem Verfahren der wenigstens eine Bremsparameter
a) an wenigstens einer ersten Radbremse und/oder an wenigstens einem ersten Rad radindividuell gesteuert oder geregelt werden, und
b) an den zweiten Radbremsen und/oder an den zweiten Rädern achsweise oder einheitlich gesteuert oder geregelt werden.

Bei dieser Variante kann wenigstens ein zweiter Soll-Bremsparameter an den achsweise oder einheitlich steuer- oder regelbaren zweiten Radbremsen und/oder an den einheitlich steuer- oder regelbaren zweiten Rädern abhängig von wenigstens einem ersten Soll-Bremsparameter an der ersten Radbremse des in der erkannten signifikanten Übersteuersituation kurvenäußeren ersten Rads und/oder an dem in der erkannten signifikanten Übersteuersituation kurvenäußeren ersten Rad gesteuert oder geregelt werden, wobei dieser erste Soll-Bremsparameter in der erkannten signifikanten Übersteuersituation insbesondere von der Fahrdynamikregelung (ESP) vorgegeben wird.

Auch kann bei dem Verfahren die signifikante Übersteuersituation des Fahrzeugs erkannt und dann das Übersteuersignal erzeugt werden, wenn eine erfasste Ist-Drehrate oder eine mit dieser korrelierende Ist-Größe von einer Soll-Drehrate oder von einer mit dieser korrelierenden Soll-Größe um mehr eine vorgegebene Schwelle abweicht.

Auch können bei dem Verfahren die ersten Bremsmittel und die zweiten Bremsmittel, insbesondere der wenigstens eine Bremsparameter abhängig von der Abweichung von der vorgegebenen Schwelle gesteuert oder geregelt werden.

Weiterhin umfasst die Erfindung auch ein Computerprogramm mit einem Programmcode, der das Bremssystem, insbesondere die Fahrdynamikregelung (ESP) des Bremssystems veranlasst, das oben beschriebene Verfahren auszuführen, wenn das Computerprogramm auf einem Prozessor ausgeführt wird.

### Zeichnung

Beispielhaft werden im Folgenden Ausführungsformen der Erfindung unter Bezugnahme auf die beigefügten Figuren beschrieben. In den Figuren zeigt:
- Fig. 1: eine schematische Darstellung einer bevorzugten Ausführungsform eines Bremssystems eines Fahrzeugs gemäß der Erfindung;
- Fig. 2: einen Ablaufplan bevorzugten Ausführungsform eines Verfahrens zum Steuern oder Regeln des Bremssystems von Fig. 1.

### Beschreibung der Ausführungsbeispiele

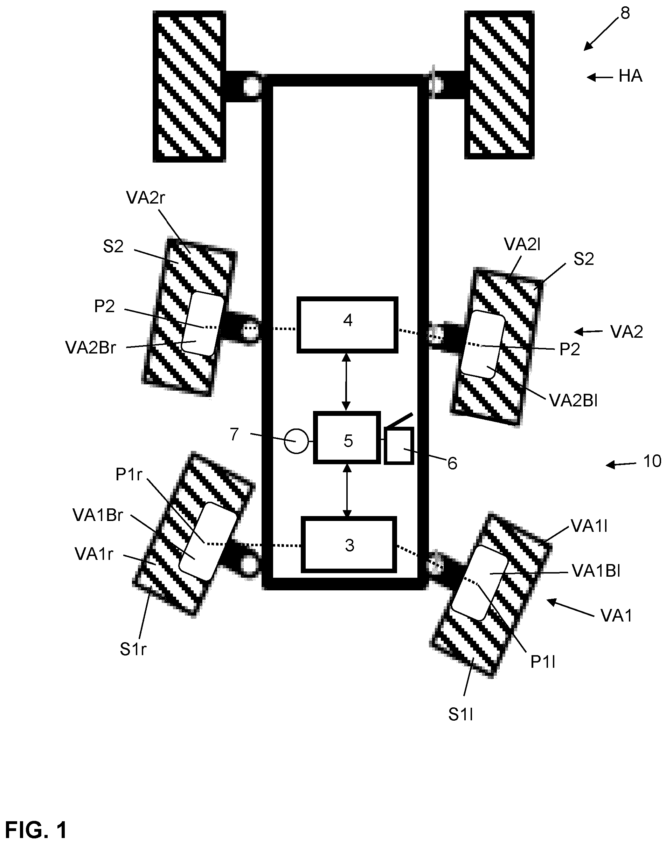

**Fig. 1** zweigt eine schematische Darstellung einer bevorzugten Ausführungsform eines Bremssystems 10 eines Fahrzeugs 8 gemäß der Erfindung, welche beispielsweise ein elektro-pneumatisches Betriebsbremssystem eines schweren Nutzfahrzeugs ist.

Das Fahrzeug 8 verfügt hier beispielsweise über zwei gelenkte und gebremste Vorderachsen, eine erste gelenkte und gebremste Vorderachse VA1 und eine zweite gelenkte und gebremste VA2 Vorderachse sowie hier beispielsweise eine Hinterachse HA.

Weiterhin weist das Bremssystem 10 erste Bremsmittel 1 auf, die konfiguriert sind zum Bremsen von Rädern VA1r, VA1l, der ersten Vorderachse VA1 und weist hierzu erste Radbremsen VA1Br, VA1Bl an den ersten Rädern VARr, VARI der ersten Vorderachse VA1 auf, sowie zweite Bremsmittel 2, die konfiguriert sind zum Bremsen von Rädern VA2r, VA2l der zweiten Vorderachse VA2 und hierzu zweite Radbremsen VA2Br, VA2BI an den zweiten Rädern VA2r, VA2l der zweiten Vorderachse VA2 aufweist.

Die ersten Bremsmittel 1 weisen hier beispielsweise erste pneumatische Radbremsen VA1Br, VA1Bl, insbesondere erste pneumatische Betriebsbremszylinder und ein zweikanaliges Druckregelmodul 3 an der ersten Vorderachse VA1 auf, um damit radindividuell steuer- oder regelbaren erste Betriebsbremsdrücke P1r, P1l in den ersten Radbremsen VA1Br, VA1Bl an den Rädern VA1r, VA1l der ersten Vorderachse VA1 radindividuell zu steuern oder zu regeln.

Die zweiten Bremsmittel 2 weisen hier beispielsweise zweite pneumatische Radbremsen VA2Br, VA2BI, insbesondere zweite pneumatische Betriebsbremszylinder an den Rädern VA2r, VA2l der zweiten Vorderachse VA2 auf sowie an der zweiten Vorderachse VA2 ein elektro-pneumatisches einkanaliges Druckregelmodul 4, um einen zweiten dann lediglich achsweise steuer- oder regelbaren und einheitlichen Betriebsbremsdruck P2 in den zweiten Radbremsen VA2Br, VA2BI an den Rädern VA2r, VA2l der zweiten Vorderachse VA2 zu steuern oder zu regeln.

Weiterhin umfasst das Bremssystem 10 von **Fig. 1** Steuer- oder Regelmittel 5, insbesondere in Form einer elektronischen Bremssteuerung mit implementierter Steuer- oder Regelsoftware. Diese Steuer- oder Regelsoftware umfasst insbesondere Routinen einer Fahrdynamikregelung (ESP), welche beispielsweise auch eine ABS-Regelung umfasst. Hierzu ist hier beispielsweise die Räder VA1r, VA1l der ersten Vorderachse VA1 und optional auch die Räder VA2r, VA2l der zweiten Vorderachse VA2 mit je einem Raddrehzahlsensor versehen, der dann ein Raddrehzahlsignal an Steuer- oder Regelmittel 5 meldet, um die Räder VA1r, VA1l der ersten Vorderachse VA1 und optional auch die Räder VA2r, VA2l der zweiten Vorderachse VA2 Bremsschlupfregeln zu können.

Die Steuer- oder Regelmittel 5 steuern oder regeln das zweikanalige Druckregelmodul 3 an der ersten Vorderachse VA1 und das einkanalige Druckregelmodul 4 an der zweiten Vorderachse VA2, um jeweils wenigstens einen Bremsparameter, hier an der ersten Vorderachse VA1 beispielsweise die ersten Bremsschlüpfe S1r, S1l und die ersten Betriebsbremsdrücke P1r, P1l in den ersten pneumatischen Radbremsen VA1Br, VA1Bl radindividuell zu steuern oder zu regeln, und um an der zweiten Vorderachse VA den dann einheitlichen zweiten Soll-Bremsschlupf S2 an den zweiten Rädern VA2r, VA2l und den hier dann ebenfalls einheitlichen zweiten Bremsdruck P2 in den zweiten Radbremsen VA2Br, VA2BI achsweise zu steuern oder zu regeln.

Das 2-Kanal-Druckregelmodul 3 an der ersten Vorderachse VA1 umfasst dann einen ersten Kanal, der beispielsweise für eine Steuerung oder Regelung eines ersten rechten Bremsdrucks P1r in der ersten rechten Radbremse VA1Br des ersten rechten Rads VA1r der ersten Vorderachse VA1, und einen zweiten Kanal, der beispielsweise für eine Steuerung oder Regelung des ersten linken Betriebsbremsdrucks P1l der ersten linken Radbremse VA1Bl des ersten linken Rads VA1l der ersten Vorderachse VA1 vorgesehen ist. Auch kann in dem ersten Kanal des 2-Kanal-Druckregelmoduls 3 der erste rechte Bremsschlupf S1r des ersten rechten Rads VA1r und in dem zweiten Kanal der erste linke Bremsschlupf S1l des ersten linken Rads VA1l der ersten Vorderachse VA1 radindividuell bremsschlupfgeregelt werden. Hierzu kann das 2-Kanal-Druckregelmodul 3 von den Steuer- oder Regelmitteln 5 gesteuert werden, in welchem dann beispielsweise auch die für die ABS-Regelung notwendige Referenzgeschwindigkeit aus den Raddrehzahlsignalen der Raddrehzahlsensoren berechnet wird.

Das 1-Kanal-Druckregelmodul 4 an der zweiten Vorderachse VA2 umfasst hingegen vorzugsweise lediglich einen einzigen Kanal, der für eine einheitliche Steuerung oder Regelung des zweiten Bremsdrucks P2 der zweiten Radbremsen VA2Br, VA2l an den zweiten Rädern VA2r, VA2l der zweiten Vorderachse VA2 vorgesehen ist. Auch kann in dem einzigen Kanal der zweite Bremsschlupf S2 der zweiten Räder VA2r, VA2l für die zweite Vorderachse VA2 achsweise und dort daher einheitlich geregelt werden.

Die beiden Druckregelmodule 3, 4 weisen in bekannte Weise je Kanal eine integrierte elektronische Steuerung, eine von der elektronischen Steuerung gesteuerte Einlass-Auslassventil-Kombination und ein pneumatisch gesteuertes Relaisventil auf, für welche die Einlass-Auslassventil-Kombination einen pneumatischen Steuerdruck erzeugt.

Das Bremssystem 10 weist außerdem einen Bremswertgeber 6 auf, der ein Bremsanforderungssignal erzeugt, das hier beispielsweise einen Fahrerbremswunsch repräsentiert. Das Bremsanforderungssignal des Bremswertgebers 6 wird von den Steuer- oder Regelmitteln 5 verarbeitet, um je Achse elektrische Bremssignale für die Druckregelmodule 3, 4 zu erzeugen, welche je Achse die jeweiligen Soll-Betriebsbremsdrücke repräsentieren, nämlich für die erste Vorderachse VA1 die Soll-Betriebsbremsdrücke P1r-Soll, P1l-Soll und für die zweite Vorderachse P2soll sowie für die Hinterachse P2-Soll.

An der Hinterachse ist beispielsweise ebenfalls ein hier nicht gezeigtes zweikanaliges Druckregelmodul angeordnet, um abhängig von dem Bremsanforderungssignal geregelte Betriebsbremsdrücke für Radbremsen der Hinterachse HA zu erzeugen.

Abhängig von den elektrischen Bremssignalen steuern dann je Kanal die in die Druckregelmodule 3, 4 integrierten elektronischen Steuerungen die Einlass-/Auslass-Ventilkombination an, um an einem Ausgang der Relaisventile Ist-Bremsdrücke P1r-Ist, P1l-Ist und P2-Ist zu modulieren, die dann je Kanal von einem integrierten Drucksensor gemessen und an die integrierte elektronische Steuerung zum Abgleich mit den Soll-Bremsdrücken P1r-Soll, P1l-Soll und P2-Soll gemeldet werden. Hierzu sind Routinen einer Bremsdruckregelung in der integrierten elektronischen Steuerung implementiert.

Außerdem umfasst das Bremssystem 10 Erkennungsmittel 7, insbesondere Erkennungsmittel der Fahrdynamikregelung (ESP), die konfiguriert sind zum Erkennen einer signifikanten Übersteuersituation des Fahrzeugs 8 und im Falle einer erkannten signifikanten Übersteuersituation des Fahrzeugs 8 zum Erzeugen eines Übersteuersignals. Diese Erkennungsmittel 7 können eine hier beispielsweise in die Steuer- oder Regelmittel 5 integrierte Auswerteelektronik sowie beispielsweise einen Drehratensensor umfassen, der mit der Auswerteelektronik zusammenwirkt, um das Übersteuersignal zu erzeugen, wenn eine von dem Drehratensensor erfasste Ist-Drehrate des Fahrzeugs 8 von einer Soll-Drehrate um mehr eine vorgegebene Schwelle abweicht. Die Soll-Drehrate kann dabei beispielsweise von einem Fahrer des Fahrzeugs 8 durch eine Lenkwinkel eines von ihm betätigten Lenkrads oder von einer Autopiloteinrichtung vorgegeben werden.

Die Steuer- oder Regelmittel 5 steuern oder regeln das einkanalige Druckregelmodul 4 an der zweiten Vorderachse VA2 dann beispielsweise, um einen hier einheitlichen zweiten Soll-Bremsschlupf S2-Soll an den zweiten Rädern VA2r, VA2l der zweiten Vorderachse VA2 abhängig von dem von der Fahrdynamikregelung (ESP) in der erkannten signifikanten Übersteuersituation vorgegebenen ersten Soll-Bremsschlupf S1l-Soll des dann kurvenäußeren ersten Rads VA1l der ersten Vorderachse VA1 einheitlich zu steuern oder zu regeln. In **Fig. 1** stellt in der erkannten signifikanten Übersteuersituation des Fahrzeugs 8 beispielsweise das erste linke Rad VA1l das kurvenäußere Rad der ersten Vorderachse VA1 dar.

Dieser erste Soll-Bremsschlupf S1l-Soll des in der erkannten signifikanten Übersteuersituation kurvenäußeren und hier beispielsweise ersten linken Rads VA1l der ersten Vorderachse VA1 wird vorzugsweise durch die in die Fahrdynamikregelung (ESP) der Steuer- und Regelmittel 5 integrierte ABS-Regelung ermittelt und dann von der Fahrdynamikregelung (ESP) durch das zweikanalige Druckregelmodul 3 umgesetzt.

Alternativ oder zusätzlich kann vorgesehen sein, dass die Steuer- oder Regelmittel 5 das einkanalige Druckregelmodul 4 an der zweiten Vorderachse VA2 in der erkannten signifikanten Übersteuersituation steuert oder regelt, um den zweiten (einheitlichen) Soll-Betriebsbremsdruck P2-Soll in den zweiten Radbremsen VA2Br, VA2l der zweiten Vorderachse VA2 abhängig von dem von der Fahrdynamikregelung ESP vorgegebenen ersten Soll-Betriebsbremsdruck P1l-Soll des in der erkannten signifikanten Übersteuersituation kurvenäußeren ersten Rads VA1l der ersten Vorderachse VA1 zu steuern oder zu regeln.

Diese Abhängigkeit kann beispielsweise darin bestehen, dass der einheitliche zweite Soll-Bremsschlupf S2-Soll an allen zweiten Rädern VA2r, VA2l und/oder der einheitliche zweite Soll-Bremsdruck P2-Soll an allen zweiten Radbremsen VA2Br, VA2BI der zweiten Vorderachse VA2 dadurch berechnet wird, dass der erste Soll-Bremsschlupf S1l-Soll des kurvenäußeren ersten (hier linken) Rads VA1l der ersten Vorderachse VA1 und/oder der erste Soll-Bremsdruck P1l-Soll an der ersten Radbremse VA1Bl des kurvenäußeren ersten Rads VA1l der ersten Vorderachse VA1 mit einem insbesondere vorgegebenen Faktor multipliziert wird. Die Abhängigkeit(en) können dann beispielsweise in einem Kennfeld abgebildet werden, das in einem Speicherbereich der Steuer- oder Regelmittel 5 abgespeichert ist.

Dieser Faktor ist vorzugsweise größer als Null und kleiner als Eins, weiterhin vorzugsweise etwas kleiner als Eins. Die zweiten Räder VA2r, VA2l der zweiten Vorderachse VA2 werden in der erkannten signifikanten Übersteuersituation des Fahrzeugs 8 dann beispielsweise mit einem einheitlichen und wegen der hier beispielsweise engen Kopplung mit dem ersten Soll-Bremsschlupf S1l des ersten kurvenäußeren Rads VA1l mit einem relativ hohen zweiten Soll-Bremsschlupf S2-Soll gebremst. Dies reduziert die Seitenführung der zweiten Räder VA2r, VA2l der zweiten Vorderachse VA2, was der Übersteuersituation entgegenwirkt.

In Kombination mit der aktivierten Fahrdynamikregelung (ESP) an der ersten Vorderachse VA1 infolge der erkannten signifikanten Übersteuersituation des Fahrzeugs 8, dort insbesondere lediglich an dem kurvenäußeren ersten Rad VA1l, verbessert sich die Fahrstabilität des Fahrzeugs signifikant im Vergleich zu einer Regelstrategie, bei welcher beispielsweise lediglich die erste Vorderachse VA1 in die Fahrdynamikregelung (ESP) einbezogen ist oder wird, nicht aber die zweite Vorderachse VA2.

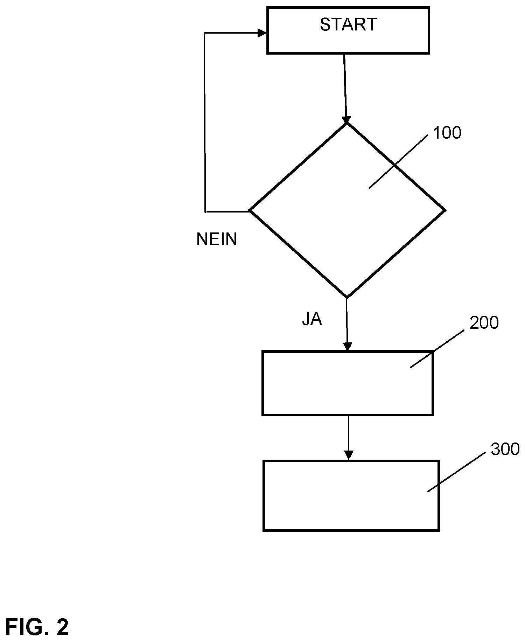

**Fig. 2** zeigt einen Ablaufplan einer bevorzugten Ausführungsform eines Verfahrens zum Steuern oder Regeln des Bremssystems von **Fig. 1****.** Die Software-Routinen, nach denen das Verfahrens abläuft, sind vorzugsweise in der Fahrdynamikregelung (ESP) des Bremssystems 10 integriert.

Nach dem START umfasst das Verfahren in einem Schritt 100 ein Überprüfen und Erkennen, ob eine signifikante Übersteuersituation des Fahrzeugs 8 vorliegt. Falls dies nicht der Fall ist ("NEIN"), so wird das Verfahren an den START zurückgeschleift. Falls dies jedoch zutrifft ("JA"), so wird in einem Schritt 200 das Übersteuersignal erzeugt.

Auf das Übersteuersignal hin steuern oder regeln die Steuer- oder Regelmittel 5 in einem Schritt 300 das einkanalige Druckregelmodul 4 und das zweikanalige Druckregelmodul 4, um die erkannte signifikante Übersteuersituation zu reduzieren oder vollständig zu beseitigen.

Dies kann beinhalten, dass die Steuer- oder Regelmittel 5 das zweikanalige Druckregelmodul 3 an der ersten Vorderachse VA1 steuern oder regeln, um beispielsweise lediglich den ersten Ist-Bremsschlupf S1l an dem kurvenäußeren ersten Rad VA1l-Ist der ersten Vorderachse VA1 auf einen Soll-Bremsschlupf VA1l-Soll zu regeln, mit dem die Übersteuersituation reduziert oder beseitigt werden kann. Weiterhin kann dies beinhalten, dass die Steuer- oder Regelmittel 5 das einkanalige Druckregelmodul 4 an der zweiten Vorderachse VA2 steuern oder regeln, um den zweiten Soll-Bremsschlupf S2-Soll an den zweiten Rädern VA2r, VA2l der zweiten Vorderachse VA2 abhängig von dem ersten Soll-Bremsschlupf S1l-Soll des in der erkannten signifikanten Übersteuersituation kurvenäußeren ersten Rads VA1l der ersten Vorderachse VA1 hier einheitlich zu steuern oder zu regeln.

Wie bereits oben beschrieben, kann diese Abhängigkeit beispielsweise darin bestehen, dass der Soll-Bremsschlupf S2-Soll an den zweiten Rädern VA2r, VA2l der zweiten Vorderachse VA2 dadurch berechnet wird, dass der erste Soll-Bremsschlupf S1l des kurvenäußeren ersten Rads VA1l der ersten Vorderachse VA1 mit einem vorgegebenen Faktor multipliziert wird. Die zweiten Räder VA2r, VA2l der zweiten Vorderachse VA2 werden dann in der erkannten signifikanten Übersteuersituation achsweise beispielsweise mit einem relativ hohen Soll-Bremsschlupf S2-Soll gebremst, um die Seitenführung der zweiten Räder VA2r, VA2l an dieser zweiten Vorderachse VA2 zu reduzieren. In Kombination mit der aktivierten Fahrdynamikregelung (ESP) an der ersten Vorderachse VA1 infolge der erkannten signifikanten Übersteuersituation des Fahrzeugs 8, dort insbesondere lediglich an dem kurvenäußeren ersten Rad VA1l, wird die Übersteuersituation des Fahrzeugs 8 reduziert.

### Bezugszeichenliste (Bestandteil der Beschreibung)

- 1: erste Bremsmittel
- 2: zweite Bremsmittel
- 3: zweikanaliges Druckregelmodul
- 4: einkanaliges Druckregelmodul
- 5: Steuer- oder Regelmittel
- 6: Bremswertgeber
- 7: Erkennungsmittel
- 8: Fahrzeug
- 10: Bremssystem
- 100-300: Verfahrensschritte
- HA: Hinterachse
- VA1: erste Vorderachse
- VA1r: erstes Rad rechts
- VA1l: erstes Rad links
- VA1Br: erste Radbremse rechts
- VA1Bl: erste Radbremse links
- P1r: erster Betriebsbremsdruck rechts
- P1l: erster Betriebsbremsdruck links
- S1r: erster Bremsschlupf rechts
- S1l: erster Bremsschlupf links
- VA2: zweite Vorderachse
- VA2r: zweites Rad rechts
- VA2l: zweites Rad links
- VA2Br: zweite Radbremse rechts
- VA2BI: zweite Radbremse links
- P2: zweiter Betriebsbremsdruck
- S2: zweiter Bremsschlupf
- Soll: Soll-Größe
- Ist: Ist-Größe

## Patentansprüche

1. Bremssystem (10) eines Fahrzeugs (8) mit wenigstens zwei gelenkten und gebremsten Vorderachsen, einer ersten gelenkten und gebremsten Vorderachse (VA1) und wenigstens einer zweiten gelenkten und gebremsten Vorderachse (VA2) und mit wenigstens einer Hinterachse (HA), umfassend:
a) erste Bremsmittel (1), die konfiguriert sind zum Bremsen von ersten Rädern (VA1r, VA1l) der ersten Vorderachse (VA1) und hierzu erste Radbremsen (VA1Br, VA1Bl) an den ersten Rädern (VA1r, VA1l) aufweisen,
c) zweite Bremsmittel (2), die konfiguriert sind zum Bremsen von zweiten Rädern (VA2r, VA2I) der wenigstens einer zweiten Vorderachse (VA2) und hierzu zweite Radbremsen (VA2Br, VA2BI) an den zweiten Rädern (VA2r, VA2l) aufweisen,
d) Steuer- oder Regelmittel (5), die konfiguriert sind, um die ersten Bremsmittel (1) und die zweiten Bremsmittel (2) Steuern oder Regeln zu können, **dadurch gekennzeichnet, dass** es weiterhin umfasst:
e) Erkennungsmittel (7), insbesondere Erkennungsmittel einer Fahrdynamikregelung (ESP) des Bremssystems (10), die konfiguriert sind zum Erkennen einer signifikanten Übersteuersituation des Fahrzeugs (8) und im Falle einer erkannten signifikanten Übersteuersituation zum Erzeugen eines Übersteuersignals, wobei
f) die Steuer- oder Regelmittel (5), insbesondere Steuer- oder Regelmittel der Fahrdynamikregelung (ESP) weiterhin konfiguriert sind, um bei einer durch die Erkennungsmittel (7) erkannten signifikanten Übersteuersituation die ersten Bremsmittel (1) und die zweiten Bremsmittel (2) abhängig von dem dann erzeugten Übersteuersignal zu steuern oder zu regeln.

2. Bremssystem nach Anspruch 1, **dadurch gekennzeichnet, dass** die Steuer- oder Regelmittel (5) konfiguriert sind, um wenigstens einen Soll-Bremsparameter (P1r-Soll, P1l-Soll, P2-Soll, S1r-Soll, S1l-Soll, S2-Soll) abhängig von dem Übersteuersignal zu steuern oder zu regeln, der eine Bremsung, Bremswirkung oder Abbremsung des Fahrzeugs (8) beeinflussen kann.

3. Bremssystem nach Anspruch 2, **dadurch gekennzeichnet, dass** der Soll-Bremsparameter wenigstens einer der folgenden Bremsparameter ist:
a) Ein Soll-Bremsdruck (P1r-Soll, P1l-Soll, P2-Soll) und/oder eine Soll-Bremskraft an wenigstens einer ersten Radbremse (VA1Br, VA1l) der ersten Vorderachse (VA1) und/oder an wenigstens einer zweiten Radbremse (VA2Br, VA2BI) der wenigstens einen zweiten Vorderachse (VA2), und/oder
b) ein Soll-Bremsschlupf (S1r-Soll, S1l-Soll, S2-Soll) wenigstens eines ersten Rads (VA1r, VA1l) der ersten Vorderachse (VA1) und/oder wenigstens eines zweiten Rads (VA2r, VA2I) der wenigstens einen zweiten Vorderachse (VA2).

4. Bremssystem nach Anspruch 2 oder 3, **dadurch gekennzeichnet, dass** die Steuer- oder Regelmittel (5), die ersten Bremsmittel (1) und die zweiten Bremsmittel (2) konfiguriert sind, um den wenigstens einen Soll-Bremsparameter (P1r-Soll, P1l-Soll, P2-Soll, S1r-Soll, S1l-Soll, S2-Soll)
a) an wenigstens einer ersten Radbremse (VA1Br, VA1Bl) und/oder an wenigstens einem ersten Rad (VA1r, VA1l), insbesondere an allen ersten Radbremsen und/oder an allen ersten Rädern radindividuell zu steuern oder zu regeln, und
b) an wenigstens einer zweiten Radbremse (VA2Br, VA2BI) und/oder an wenigstens einem zweiten Rad (VA2r, VA2l), insbesondere an allen zweiten Radbremsen und/oder an allen zweiten Rädern radindividuell zu steuern oder zu regeln.

5. Bremssystem nach Anspruch 2 oder 3, **dadurch gekennzeichnet, dass** die Steuer- oder Regelmittel (5), die ersten Bremsmittel (1) und die zweiten Bremsmittel (2) konfiguriert sind, um den wenigstens einen Soll-Bremsparameter (P1r-Soll, P1l-Soll, P2-Soll, S1r-Soll, S1l-Soll, S2-Soll) an wenigstens einem ersten Rad (VA1r, VA1l) und/oder an wenigstens einer ersten Radbremse (VA1Br, VA1Bl) und an wenigstens einem zweiten Rad (VA2r, VA2I) und/oder an wenigstens einer zweiten Radbremse (VA2Br, VA2BI) seitenweise zu steuern oder zu regeln.

6. Bremssystem nach Anspruch 2 oder 3, **dadurch gekennzeichnet, dass** die Steuer- oder Regelmittel (5), die ersten Bremsmittel (1) und die zweiten Bremsmittel (2) konfiguriert sind, um den wenigstens einen Soll-Bremsparameter (P1r-Soll, P1l-Soll, P2-Soll, S1r-Soll, S1l-Soll, S2-Soll)
a) an wenigstens einer ersten Radbremse (VA1Bl) und/oder an wenigstens einem ersten Rad (VA1r, VA1l) radindividuell zu steuern oder zu regeln, und
b) an den zweiten Radbremsen (VA2Br, VA2BI) und/oder an den zweiten Rädern (VA2r, VA2I) achsweise oder einheitlich zu steuern oder zu regeln.

7. Bremssystem nach Anspruch 6, **dadurch gekennzeichnet, dass** die Steuer- oder Regelmittel (5), die ersten Bremsmittel (1) und die zweiten Bremsmittel (2) konfiguriert sind, um den wenigstens einen zweiten Soll-Bremsparameter (P2-Soll, S2-Soll) an den achsweise oder einheitlich steuer- oder regelbaren zweiten Radbremsen (VA2Br, VA2BI) und/oder an den einheitlich steuer- oder regelbaren zweiten Rädern (VA2r, VA2I) abhängig von wenigstens einem ersten Soll-Bremsparameter (P1r-Soll, P1l-Soll, S1r-Soll, S1l-Soll) an der ersten Radbremse (VA1Bl) des in der erkannten signifikanten Übersteuersituation kurvenäußeren ersten Rads (VA1l) und/oder an dem in der erkannten signifikanten Übersteuersituation kurvenäußeren ersten Rad (VA1l) zu steuern oder zu regeln, wobei dieser erste Soll-Bremsparameter (P1r-Soll, P1l-Soll, S1r-Soll, S1l-Soll) in der erkannten signifikanten Übersteuersituation insbesondere von der Fahrdynamikregelung (ESP) vorgegeben wird.

8. Bremssystem nach einem der vorhergehenden Ansprüche, **dadurch gekennzeichnet, dass** die Erkennungsmittel (7) konfiguriert sind, die signifikante Übersteuersituation des Fahrzeugs (8) zu erkennen und dann das Übersteuersignal zu erzeugen, wenn eine erfasste Ist-Drehrate oder eine mit dieser korrelierende Ist-Größe von einer Soll-Drehrate oder von einer mit dieser korrelierenden Soll-Größe um mehr eine vorgegebene Schwelle oder signifikant abweicht.

9. Bremssystem nach Anspruch 8, **dadurch gekennzeichnet, dass** die Steuer- oder Regelmittel (5), die ersten Bremsmittel (1) und die zweiten Bremsmittel (2) konfiguriert sind, um die ersten Bremsmittel und die zweiten Bremsmittel, vorzugsweise den wenigstens einen Soll-Bremsparameter (P1r-Soll, P1l-Soll, P2-Soll, S1r-Soll, S1l-Soll, S2-Soll), insbesondere den wenigstens einen zweiten Soll-Bremsparameter (P2-Soll, S2-Soll) abhängig von der Abweichung zu steuern oder zu regeln.

10. Bremssystem nach einem der vorhergehenden Ansprüche, **dadurch gekennzeichnet, dass** es eine Fahrdynamikregelung (ESP) umfasst.

11. Bremssystem nach einem der vorhergehenden Ansprüche, **dadurch gekennzeichnet, dass** die signifikante Übersteuersituation resultiert:
a) aus einer Aktivierung der ersten Bremsmittel (1) und der zweiten Bremsmittel (2) durch die Steuer- oder Regelmittel (5) im Rahmen einer fahrerabhängigen oder fahrerunabhängigen Bremsung, und/oder
b) aus einem fahrerabhängigen oder fahrerunabhängigen Lenkmanöver.

12. Bremssystem nach einem der vorhergehenden Ansprüche, **dadurch gekennzeichnet, dass** es ein elektro-pneumatisches Bremssystem, ein elektro-hydraulisches Bremssystem und/oder ein elektro-mechanisches Bremssystem ist oder umfasst.

13. Bremssystem nach einem der vorhergehenden Ansprüche, **dadurch gekennzeichnet, dass**
a) die Erkennungsmittel (7) wenigstens einen Drehratensensor und/oder wenigstens einen Beschleunigungssensor, und/oder
b) die Steuer- oder Regelmittel (5) wenigstens ein elektronisches Steuergerät umfassen, in welchem insbesondere Routinen einer Fahrdynamikregelung implementiert sind, und/oder
c) die ersten Bremsmittel (1) und/oder die zweiten Bremsmittel (2) pneumatische Radbremsen und ein elektro-pneumatisches einkanaliges Druckregelmodul (4) oder ein mehrkanaliges Druckregelmodul (3) an der ersten Vorderachse (VA1) und/oder an der wenigstens einen zweiten Vorderachse (VA2) aufweisen, wobei
c1) das einkanalige Druckregelmodul (4) konfiguriert und von den Steuer- oder Regelmitteln (5) gesteuert oder geregelt ist, um die ersten und/oder zweiten Radbremsen und/oder die ersten und/oder zweiten Räder, insbesondere die zweiten Radbremsen (VA2Br, VA2BI) der zweiten Räder (VA2r, VA2I) der wenigstens einen zweiten Vorderachse (VA2) und/oder die zweiten Räder (VA2r, VA2I) achsweise oder einheitlich zu steuern oder zu regeln, und
c2) das mehrkanalige Druckregelmodul (3) konfiguriert und von den Steuer- oder Regelmitteln (5) gesteuert oder geregelt ist, um wenigstens eine erste und/oder zweite Radbremse und/oder wenigstens ein erstes und/oder zweiten Rad, insbesondere die ersten Radbremsen (VA1Br, VA1Br) und/oder die ersten Räder (VA1l, VA1r) radindividuell zu steuern oder zu regeln.

14. Fahrzeug, insbesondere Nutzfahrzeug umfassend ein Bremssystem nach einem der vorhergehenden Ansprüche.

15. Verfahren zum Steuern oder Regeln eines insbesondere eine Fahrdynamikregelung (ESP) aufweisenden Bremssystems (10) eines Fahrzeugs (8) mit wenigstens zwei gelenkten und gebremsten Vorderachsen, einer ersten gelenkten und durch erste Bremsmittel (1) bremsbaren Vorderachse (VA1) und wenigstens einer zweiten gelenkten und durch zweite Bremsmittel (2) gebremsten Vorderachse (VA2) und mit wenigstens einer Hinterachse (HA), wobei die ersten Bremsmittel (1) zum Bremsen von ersten Rädern (VA1r, VA1l) der ersten Vorderachse (VA1) und hierzu erste Radbremsen (VA1Br, VA1Bl) an den ersten Rädern (VA1r, VA1l) vorgesehen werden, und die zweiten Bremsmittel (2) zum Bremsen von zweiten Rädern (VA2r, VA2l) der wenigstens einen zweiten Vorderachse (VA2) und hierzu zweite Radbremsen (VA2Br, VA2BI) an den zweiten Rädern (VA2r, VA2I) vorgesehen werden, **dadurch gekennzeichnet, dass** es insbesondere im Rahmen der Fahrdynamikregelung (ESP) wenigstens die folgenden Schritte umfasst:
a) Überprüfen und Erkennen, ob eine signifikante Übersteuersituation des Fahrzeugs (8) vorliegt, und
b) falls eine signifikante Übersteuersituation des Fahrzeugs (8) erkannt worden ist:
b1) Erzeugen eines Übersteuersignals, und
b2) Steuern oder Regeln der ersten Bremsmittel (1) und der zweiten Bremsmittel (2) abhängig von dem Übersteuersignal.

16. Verfahren nach Anspruch 15, **dadurch gekennzeichnet, dass** wenigstens ein Soll-Bremsparameter (P1r-Soll, P1l-Soll, P2-Soll, S1r-Soll, S1l-Soll, S2-Soll) abhängig von dem Übersteuersignal gesteuert oder geregelt wird, der eine Bremsung, Bremswirkung oder Abbremsung des Fahrzeugs (8) beeinflusst oder beeinflussen kann.

17. Verfahren nach Anspruch 16, **dadurch gekennzeichnet, dass** der wenigstens eine Soll-Bremsparameter (P1r-Soll, P1l-Soll, P2-Soll, S1r-Soll, S1l-Soll, S2-Soll)
a) an wenigstens einer ersten Radbremse (VA1Br, VA1Bl) und/oder an wenigstens einem ersten Rad (VA1r, VA1l) radindividuell gesteuert oder geregelt wird, und
b) an wenigstens einer zweiten Radbremse (VA2Br, VA2BI) und/oder an wenigstens einem zweiten Rad (VA2r, VA2I) radindividuell gesteuert oder geregelt wird.

18. Verfahren nach Anspruch 16, **dadurch gekennzeichnet, dass** der wenigstens eine Soll-Bremsparameter (P1r-Soll, P1l-Soll, P2-Soll, S1r-Soll, S1l-Soll, S2-Soll) an wenigstens einem ersten Rad (VA1r, VA1I) und/oder an wenigstens einer ersten Radbremse (VA1Br, VA1Bl) und an wenigstens einem zweiten Rad (VA2r, VA2I) und/oder an wenigstens einer zweiten Radbremse (VA2Br, VA2BI) seitenweise gesteuert oder geregelt wird.

19. Verfahren nach Anspruch 16, **dadurch gekennzeichnet, dass** der wenigstens eine Soll-Bremsparameter (P1r-Soll, P1l-Soll, P2-Soll, S1r-Soll, S1l-Soll, S2-Soll)
a) an wenigstens einer ersten Radbremse (VA1Bl) und/oder an wenigstens einem ersten Rad (VA1r, VA1l) radindividuell gesteuert oder geregelt wird, und
b) an den zweiten Radbremsen (VA2Br, VA2BI) und/oder an den zweiten Rädern (VA2r, VA2I) achsweise oder einheitlich gesteuert oder geregelt wird.

20. Verfahren nach Anspruch 19, **dadurch gekennzeichnet, dass** wenigstens ein zweiter Soll-Bremsparameter (P2-Soll, S2-Soll) an den achsweise oder einheitlich steuer- oder regelbaren zweiten Radbremsen (VA2Br, VA2BI) und/oder an den einheitlich steuer- oder regelbaren zweiten Rädern (VA2r, VA2I) abhängig von wenigstens einem ersten Soll-Bremsparameter (P1r-Soll, P1l-Soll, S1r-Soll, S1l-Soll) an der ersten Radbremse (VA1Bl) des in der erkannten signifikanten Übersteuersituation kurvenäußeren ersten Rads (VA1l) und/oder an dem in der erkannten signifikanten Übersteuersituation kurvenäußeren ersten Rad (VA1l) gesteuert oder geregelt wird, wobei dieser erste Soll-Bremsparameter (P1r-Soll, P1l-Soll, S1r-Soll, S1l-Soll) in der erkannten signifikanten Übersteuersituation insbesondere von der Fahrdynamikregelung (ESP) vorgegeben wird.

21. Verfahren nach einem der Ansprüche 15 bis 20, **dadurch gekennzeichnet, dass** die signifikante Übersteuersituation des Fahrzeugs (8) erkannt und dann das Übersteuersignal erzeugt wird, wenn eine erfasste Ist-Drehrate oder eine mit dieser korrelierende Ist-Größe von einer Soll-Drehrate oder von einer mit dieser korrelierenden Soll-Größe um mehr eine vorgegebene Schwelle abweicht.

22. Verfahren nach Anspruch 21, **dadurch gekennzeichnet, dass** der wenigstens eine Soll-Bremsparameter (P1r-Soll, P1l-Soll, P2-Soll, S1r-Soll, S1l-Soll, S2-Soll), insbesondere der wenigstens eine zweiten Soll-Bremsparameter (P2-Soll, S2-Soll) abhängig von der Abweichung gesteuert oder geregelt wird.
